# EUROPEAN PATENT SPECIFICATION

(11) **EP 2 713 739 B1**
(45) Date of publication and mention of the grant of the patent: **07.10.2015**
(21) Application number: 12723737.8
(22) Date of filing: 24.05.2012
(51) Int. Cl.: A01N 55/00, A01N 25/30, A01N 33/12, A01N 47/44

(54) **PLANT TREATMENT METHOD**
PFLANZENBEHANDLUNGSVERFAHREN
PROCÉDÉ DE TRAITEMENT DES PLANTES

(30) Priority: 25.05.2011 GB 201108806
(43) Date of publication of application: 09.04.2014
(73) Proprietor: Arcis Biotechnology Limited, Daresbury, Warrington WA4 4AB (GB)
(72) Inventor: GARNER, George Victor, Stockport SK3 8TL (GB); ROGERS, Jan, Chester CH2 2RA (GB); TAYLOR, Victoria, Swansea SA6 6TD (GB)
(74) Representative: Appleyard Lees
(86) International application number: PCT/GB2012/051174
(87) International publication number: WO 2012/160385

(56) References cited:
- EP-A1- 2 274 985
- WO-A1-95/12977

## Description

The present invention relates to a method of treating plants. In particular the invention relates to methods of treating plants with compositions having long lasting efficacy and which can be applied in aqueous solution.

The method of the present invention may be used to treat any type of plant, for example trees, flowers, fruits and vegetables. All types of plants are susceptible to damage and disease from attack by microorganisms for example bacterial, fungi and algae. Plants may also be attacked by parasitic species.

One particular problem that has increased in recent years is damage to plants by nematodes.

Nematodes are microscopic unsegmented worms which may exist as free-living species feeding on bacteria or fungi or as parasitic species surviving on animal or plant hosts. While free-living nematodes may be a generally beneficial part of the eco-system, plant parasitic nematodes are now a significant problem.

There are two major types of parasitic nematodes which attack plants. Ectoparasites live in the plant soil and feed on the root cells; endoparasitic species enter the root and migrate through the plant before starting to feed.

Both types of parasite can cause significant damage to the plant. The roots will be weakened and become much more shallow and sparse. Damage to the roots can lead to reduction in uptake of nutrients and water, as well as disrupting the synthesis of plant growth regulators. Nematode parasites also divert energy from the plant.

Plants infected with parasitic nematodes will typically become weaker and less resistant to stress. This can lead to plants withering and dying or producing fewer fruits and flowers. Poorer harvests of food crops can have catastrophic consequences.

Traditional nematicidal treatments have involved the use of organophosphate compounds. However these are toxic to humans and cause damage to the environment.

Nitrogen-based compounds like quaternary ammonium compounds have been used against nematodes as taught in WO 95/12977.

There therefore exists the need to provide a nematicidal composition having an improved environmental profile and lower toxicity.

Although nematodes are a major problem, plants are also damaged or killed by some bacteria, fungi and algae present in the soil. Thus a plant treatment composition which could combat bacteria and/or algae and/or fungi would also be highly beneficial.

It is an aim of the present invention to provide a plant treatment method which overcomes at least one disadvantage of the prior art whether specifically mentioned herein or otherwise.

According to a first aspect of the present invention there is provided a plant treatment method comprising contacting the plant with:
(a) a compound of formula (I): 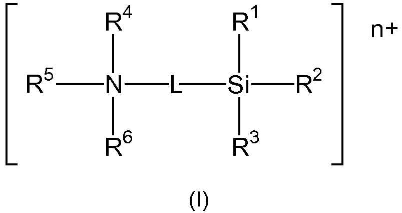 or a derivative salt thereof wherein L is a linking group; each of R¹, R² and R³ is independently selected from an optionally substituted alkyl, alkenyl, aryl or alkoxy group; R⁴ is oxygen or an optionally substituted alkyl, alkenyl or aryl group; each of R⁵ and R⁶ is an optionally substituted alkyl, alkenyl or aryl group; and n is 0 or 1;
(b) at least one cationic biocide;
(c) a hydrocarbyl-sacharide compound; and
(d) a non-ionic surfactant.

Compounds of formula (I) are known from e.g. EP2274985.

The method of the present invention involves contacting the plant with components (a), (b), (c) and (d). These may be contacted with the plant separately or in combination. When they are contacted separately they may be contacted in any order. In preferred embodiments components (a), (b), (c) and (d) are contacted with the plant in combination. Preferably the method of the present invention involves contacting the plant with a composition comprising components (a), (b), (c) and (d). Preferred compositions are aqueous compositions.

Although the present invention may involve contacting the plant with two or more compositions in preferred embodiments a single composition is used. References in this specification to the composition which is contacted with the plant preferably refer to such a single composition comprising all of components (a), (b), (c) and (d). However it is within the scope of the invention to use a plurality of compositions such that some components are contacted separately.

The composition contacted with the plant comprises a compound of formula (I).

It will be appreciated that in embodiments in which n is 1, the species shown in formula (I) is a cationic species.

In such embodiments the species of formula (I) will be present as an adduct or salt including a suitable counterion. However for ease of reference, in this document we may make general reference to compounds of formula (I) and any such reference includes where appropriate any counterion which must be present.

Any suitable counterion may be used. Monovalent counterions are preferred. Suitable counterions include halides and oxyhalo ions for example chloride, bromide, bromite, chlorite, hypochlorite, chlorate, bromate and iodate.

In embodiments in which R⁴ is O, the compound has the structure shown in formula (II) and n is 0:

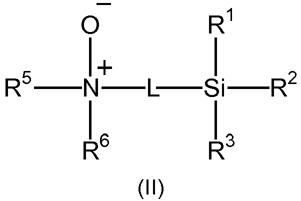

In preferred embodiments in which R⁴ is not O, n is 1 and a suitable counterion is present.

In preferred embodiments R⁴ is not oxygen and the compound of formula (I) is preferably a quaternary ammonium salt.

In this specification any optionally substituted alkyl, alkenyl, aryl or alkoxy group may be optionally substituted with one or more substituents selected from halo, hydroxy, nitro, mercapto, amino, alkyl, alkoxy, aryl, sulfo and sulfoxy.

Preferred substituents which may be present in the alkyl, alkenyl, aryl or alkoxy groups defined herein are halogens, in particular fluorine. In particular each of R¹, R², R³, R⁴, R⁵ or R⁶ may comprise fluoroalkyl or fluoroalkoxy groups in which one or more hydrogen atoms are substituted with fluorine.

Each of R¹, R² and R³ is independently selected from an optionally substituted alkyl, alkenyl, aryl or alkoxy group. Preferably at least one of R¹, R² and R³ is an optionally substituted alkoxy group. More preferably each of R¹, R² and R³ is an optionally substituted alkoxy group, most preferably each is an unsubstituted alkoxy group. The alkyl group of the alkoxy group may be straight chained or branched. Preferably each of R¹, R² and R³ is an alkoxy group having from 1 to 20 carbon atoms, preferably from 1 to 16 carbon atoms, more preferably from 1 to 12 carbon atoms, preferably from 1 to 8 carbon atoms, suitably from 1 to 6 carbon atoms, more preferably from 1 to 4 carbon atoms.

In preferred embodiments each of R¹, R² and R³ is independently selected from methoxy, ethoxy, propoxy, butoxy and isomers thereof. Most preferably each of R¹, R² and R³ is selected from methoxy, ethoxy and isopropoxy. Preferably each of R¹, R² and R³ is selected from methoxy and ethoxy. Most preferably each of R¹, R² and R³ is methoxy. Preferably each of R¹, R² and R³ is the same.

In embodiments in which R¹, R² and R³ are substituted alkoxy they are preferably fluoro substituted alkoxy in which all of the hydrogen atoms have been replaced with fluorine atoms. Thus in some embodiments each of R¹, R² and R³ may be independently selected from trifluoromethoxy, pentafluoroethoxy, heptafluoropropoxy, nonafluorobutoxy and isomers thereof.

R⁴ may be oxygen or an optionally substituted alkyl, alkenyl, or aryl group. Preferably R⁴ is an optionally substituted alkyl group.

R⁴ is preferably an alkyl group or a fluoro-alkyl group. When R⁴ is a fluoroalkyl group it is preferably an alkyl group in which all of the hydrogen atoms have been replaced by fluorine. These may be referred to as perfluoro-alkyl groups. Preferred fluoroalkyl groups are those having from 1 to 20 carbon atoms, preferably 1 to 16 carbon atoms, more preferably 1 to 12 carbon atoms, preferably 1 to 8 carbon atoms, for example 1 to 6 carbon atoms, most preferably 1 to 4 carbon atoms. Preferred fluoroalkyl groups are trifluoromethyl, pentafluoroethyl, heptafluoropropyl, nonafluorobutyl and isomers thereof. Nonafluorobutyl is especially preferred.

Preferably R⁴ is an alkyl group, most preferably an alkyl group having 1 to 24 carbon atoms, preferably 1 to 18 carbon atoms, more preferably 1 to 12 carbon atoms, suitably 1 to 8 carbon atoms, more preferably 1 to 4 carbon atoms. Most preferably R⁴ is selected from methyl, ethyl, propyl, butyl and isomers thereof. More preferably R⁴ is selected from ethyl and methyl. Most preferably R⁴ is methyl.

Each of R⁵ and R⁶ may be independently selected from an optionally substituted alkyl, alkenyl, aryl or alkoxy group.

Most preferably each of R⁵ and R⁶ is an optionally substituted alkyl or alkoxy group, most preferably an optionally substituted alkyl group. Each of R⁴, R⁵ and R⁶ may be a fluoroalkyl group in which some or preferably all of the hydrogen atoms have been replaced by fluorine atoms. Preferred fluoroalkyl groups are those having from 1 to 20 carbon atoms, preferably 1 to 16 carbon atoms, more preferably 1 to 12 carbon atoms, for example 1 to 10 carbon atoms.

In embodiments in which each of R⁵ and R⁶ is fluoroalkyl, each may be a fluoroalkyl group having 4 to 10 carbon atoms, for example 8 carbon atoms.

In some preferred embodiments each of R⁵ and R⁶ is an alkyl group, suitably an unsubstituted alkyl group. The alkyl group may be straight chained or branched. In such embodiments R⁵ is preferably an alkyl group having more than 8 carbon atoms and R⁶ is preferably an alkyl group having less than 8 carbon atoms.

Preferably R⁵ is an alkyl group having from 8 to 30 carbon atoms, for example from 10 to 26 carbon atoms, suitably from 12 to 24 carbon atoms, preferably from 14 to 22 carbon atoms, suitably from 16 to 20 carbon atoms, for example 17 to 19 carbon atoms, suitably 18 carbon atoms.

R⁶ is preferably an alkyl group having from 1 to 8 carbon atoms, most preferably 1 to 6 carbon atoms, more preferably 1 to 4 carbon atoms. R⁶ may suitably be selected from methyl, ethyl, propyl, butyl and isomers thereof. Preferably R⁶ is methyl or ethyl. Most preferably R⁶ is methyl.

L is a linking group. It may suitably be a bond or an optionally substituted alkylene, alkenylene or arylene group. Preferably L is an optionally substituted alkenylene group. It may be substituted along the chain or within the chain. For example L may be an ether linking moiety, i.e. a group of formula O(CH₂)ₙ in which n is 1 to 12, preferably 1 to 6.

Preferably L is an unsubstituted alkylene group, more preferably an alkylene group having 1 to 12 carbon atoms, preferably 1 to 10 carbon atoms, suitably 1 to 8 carbon atoms, for example 2 to 8 carbon atoms, more preferably 2 to 6 carbon atoms, suitably 2 to 5 carbon atoms for example 2 to 4 carbon atoms. In especially preferred embodiments L is a propylene group.

In especially preferred embodiments of the compound of formula (I), R¹, R² and R³ are each C₁ to C₄ alkoxy, L is a C₂ to C₅ alkylene group, A is nitrogen, R⁴ and R⁶ are each C₁ to C₄ alkyl groups and R⁵ is a C₁₂ to C₂₄ alkyl group.

Most preferably the compound of formula (I) is the compound shown in formula (III):

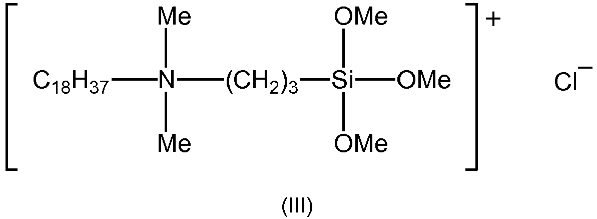

This compound is commercially available as a solution in methanol. It may suitably be incorporated in the composition in a highly concentrated form, preferably comprising at least 90 wt% or at least 95 wt% active ingredient.

Component (a) is preferably present in the composition contacted with the plant in an amount of at least 0.1 ppm, preferably at least 0.5 ppm, more preferably at least 1 ppm, preferably at least 2.5 ppm, suitably at least 5 ppm, preferably at least 7.5 ppm, preferably at least 10 ppm, for example at least 15 ppm.

Component (a) may be present in the composition contacted with the plant in an amount of up to 20000, suitably up to 10000 ppm, preferably 5000 ppm, more preferably up to 4000 ppm, suitably up to 3000 ppm, preferably up to 2000 ppm, preferably up to 1750 ppm, for example up to 1500 ppm.

In some embodiments the composition may comprise up to 1000 ppm, up to 500 ppm, up to 400 ppm, up to 300 ppm, up to 200 ppm, up to 150 ppm or up to 100 ppm component (a). The amount of component (a) may vary depending on the nature of plant with which the composition is contacted.

In some embodiments the composition may comprise from 50 to 120 ppm component (a), for example from 70 to 90 ppm.

In some embodiments the composition may comprise from 200 to 300 ppm component (a), for example from 230 to 250 ppm.

In some embodiments the composition may comprise from 600 to 1000 ppm component (a), for example from 750 to 850 ppm.

In some embodiments the composition may comprise from 1000 to 1500 ppm component (a), for example from 1150 to 1250 ppm.

For the avoidance of doubt "ppm" in this specification refers to parts per million by weight.

Component (a) may comprise a mixture of compounds. In such embodiments the above amounts refer to all such compounds present in the composition.

Component (a) may be incorporated into the composition along with a diluent or carrier. The above definitions refer to the amount of active component present.

The present invention may involve contacting the plant which a composition comprising at least one cationic biocide, component (b).

In preferred embodiments component (b) is applied in an aqueous solution.

Preferred cationic biocides for use herein include quaternary ammonium based biocides and guanidine-containing biocide compounds.

For the avoidance of doubt, the definition of one or more cationic biocides of component (b) does not include component (a). Compounds of formula (I) are known to have biocidal properties. Component (a) may provide some biocidal activity in the compositions of the present invention. However any description of cationic biocide or a quaternary ammonium salt as a cationic biocide of component (b) does not refer to component (a).

Preferably the composition contacted with the plant comprises at least 0.5 ppm of cationic biocide component (b), preferably at least 1 ppm, more preferably at least 2.5 ppm, preferably at least 5 ppm, suitably at least 7.5 ppm, preferably at least 10 ppm, more preferably at least 15 ppm, suitably at least 20 ppm, preferably at least 25 ppm.

The composition suitably comprises up to 20000 ppm cationic biocide component (b), preferably up to 10000 ppm suitably up to 5000 ppm, preferably up to 4000 ppm, suitably up to 3000 ppm, for example up to 2000 ppm or up to 1700 ppm.

In some embodiments the composition may comprise up to 5000 ppm, up to 1000 ppm, up to 500 ppm, up to 400 ppm, up to 300 ppm, up to 200 ppm or up to 170 ppm component (b). The amount of component (b) may vary depending on the nature of the plant with which the composition is contacted.

In some embodiments the composition may comprise from 100 to 200 ppm component (b), for example from 120 to 160 ppm.

In some embodiments the composition may comprise from 350 to 475 ppm component (b), for example from 400 to 440 ppm.

In some embodiments the composition may comprise from 1000 to 1700 ppm component (b), for example from 1300 to 1500 ppm.

In some embodiments the composition may comprise from 1500 to 2500 ppm component (b), for example from 2000 to 2200 ppm.

Component (b) may be incorporated into the composition along with a diluent or carrier. The above definitions refer to the amount of active component present.

A mixture of two or more cationic biocide components may be present in component (b) of the compositions used in the present invention. In such embodiments the above amounts refer to all such cationic biocides present. In some preferred embodiments component (b) comprises at least two cationic biocides.

Suitably component (b) comprises a cationic biocide selected from a quaternary ammonium salt, a guanidine based compound or a mixture thereof.

Suitable quaternary ammonium cationic biocides have the structure shown in formula (V): 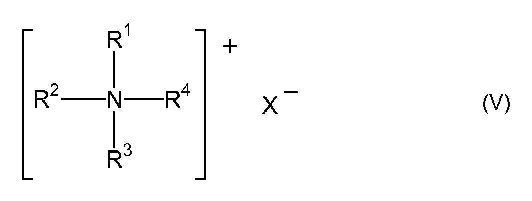 where each of R¹, R², R³ and R⁴ is an optionally substituted alkyl, alkenyl, alkylaryl or aryl group and X⁻ is a suitable anion. Preferably each of R¹, R², R³ and R⁴ is an optionally substituted alkyl or alkylaryl group, more preferably an unsubstituted alkyl or alkylaryl group.

Any suitable anion X⁻ may be used. X may be selected from halide, acetate, nitrite, a lower alkosulfate, carbonate or alkyl carboxylate. Preferably X is chloride or bromide.

Each of R¹, R², R³ and R⁴ may be an unsubstituted alkyl group having from 1 to 30 carbon atoms or an alkylaryl group, for example a benzyl group.

Preferably at least one of R¹, R², R³ and R⁴ is an unsubstituted alkyl group having at least 6 carbon atoms, preferably at least 8 carbon atoms.

In one preferred embodiment R¹ is an alkyl group having from 6 to 30 carbon atoms, preferably from 8 to 24 carbon atoms, suitably from 8 to 20 carbon atoms, for example from 10 to 18 carbon atoms and most preferably from 12 to 16 carbon atoms; each of R² and R³ is an alkyl group having from 1 to 4 carbon atoms, preferably methyl and R⁴ is an alkylaryl group, preferably benzyl. Thus a particularly preferred cationic biocide for use herein is a benzyldimethylalkyl ammonium chloride or bromide in which the alkyl group has from 12 to 16 carbon atoms. The skilled person will appreciate that such compounds may often be present as a mixture of homologues.

In another preferred embodiment the cationic biocide of formula (V) is one in which each of R¹ and R² is an alkyl group having from 6 to 20 carbon atoms, preferably from 6 to 16 carbon atoms, suitably from 8 to 12 carbon atoms, for example from 8 to 10 carbon atoms; and R³ and R⁴ is each an alkyl group having 1 to 4 carbon atoms, preferably methyl. One especially preferred cationic biocide for use herein is didecyldimethyl ammonium chloride or bromide.

The composition contacted with the plant may comprise at least 0.5 ppm quaternary ammonium salts, preferably at least 1 ppm, preferably at least 5 ppm, suitably at least 10 ppm, preferably at least 25 ppm, for example at least 50 ppm.

The composition may comprise up to 10000 ppm, up to 5000 ppm, up to 4000 ppm, up to 3000 ppm, or 2000 ppm, quaternary ammonium salts. The amount of quaternary ammonium salt may vary depending on the nature of the plant with which the composition is contacted.

In some embodiments the composition may comprise from 50 to 150 ppm quaternary ammonium salt, for example from 90 to 110 ppm.

In some embodiments the composition may comprise from 200 to 400 ppm quaternary ammonium salt, for example from 280 to 320 ppm.

In some embodiments the composition may comprise from 750 to 1250 ppm quaternary ammonium salt, for example from 950 to 1150 ppm.

In some embodiments the composition may comprise from 1250 to 1750 ppm quaternary ammonium salt, for example from 1450 to 1550 ppm.

The composition which is contacted with the plant may suitably comprise from 0.1 to 1000 ppm of one or more quaternary ammonium biocides, preferably 1 to 500 ppm, more preferably 5 to 200 ppm, for example from 10 to 150 ppm or from 20 to 120 ppm. For the avoidance of doubt these amounts do not include component (a).

The above amounts refer to the total of all quaternary ammonium salts present in the composition. These may be incorporated into the composition along with a diluent or carrier. The above definitions refer to the amount of active component present.

In some embodiments component (b) comprises only quaternary ammonium salts.

In some embodiments component (b) comprises one or more quaternary ammonium salts and one or more guanidine derived cationic biocides.

Suitable guanidine derived cationic biocide compounds for use herein include guanidine based compounds, diguanidine based compounds and polymeric guanidine based compounds.

Suitable guanidine based compounds include biguanidine and polymeric guanidine compounds of formula (VI): 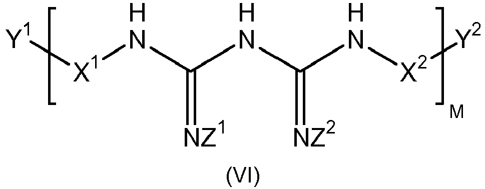 wherein X¹ and X² are either a hydrogen or any aliphatic, cycloaliphatic, aromatic, substituted aliphatic, substituted aromatic, heteroaliphatic, heterocyclic, and/or heteroaromatic compound. X¹ and X² can be the same or different. Y¹ and Y² are any aliphatic, cycloaliphatic, aromatic, substituted aliphatic, substituted aromatic, heteroaliphatic, heterocyclic, and/or heteroaromatic compound. Y¹ and Y² can be the same or different. M is an number equal to or greater than 1. Typically, M has an average value such that the molecular weight of the biguanide compounds is about 1000-1400; however, the molecular weight can be higher or lower. Generally M is about 2-20. Z¹ and Z² are either a hydrogen or a salt. Z¹ and Z² can be the same of different. In another and/or alternative aspect of this embodiment, the above-mentioned organic materials can be modified to include a thiol group in their structure so as to allow for the bonding of the compound to a metallic substrate, and/or may be derivatized with other functional groups to permit direct immobilization on a non-metallic substrate. In still another and/or alternative aspect of this embodiment, the above-mentioned organic materials may also be suitably functionalized to incorporate groups such as, but not limited to, hydroxy, amine, halogen, epoxy, alkyl and/or alkoxy silyl functionalities to enable direct immobilization to a surface. In yet another and/or alternative aspect of this embodiment, the salt can include, but is not limited to, salts with an inorganic acid such as, but not limited to, hydrochloride, hydrofluoride, nitrate, sulfate and/or phosphate, and/or salts with an organic acid such as, but not limited to, carboxylic acid, acetate, benzoate, tartrate, adipate, lactate, formate, maleate, glutamate, ascorbate, citrate, gluconate, oxalate, succinate, pamoate, salicylate, isethionate, succinamate, mono-diglycollate, dimethanesulfonate, di-isobutyrate, and/or glucoheptonate. Specific examples of these compounds include, but are not limited to, polyhexamethylene biguanide hydrochloride, p-chlorophenyl biguanide, and 4-chlorobenzhydryl biguanide. In still yet another and/or alternative aspect of this embodiment, the biguanide compound includes, but is not limited to, halogenated hexidine such as, but not limited to, chlorhexidine (1,1'-hexamethylene-bis-5-(4-chlorophenyl biguanide) and its salts. The salts include, but are not limited to, salts with an inorganic acid, such as hydrochloride, hydrofluoride, nitrate, sulfate and/or phosphate, and/or salts with an organic acid such as, but not limited to, carboxylic acid, acetate, benzoate, tartrate, adipate, lactate, formate, maleate, glutamate, ascorbate, citrate, gluconate, oxalate, succinate, pamoate, salicylate, isethionate, succinamate, mono-diglycollate, dimethanesulfonate, di-isobutyrate, and/or glucoheptonate. Examples of salts of chlorhexidine include, but are not limited to, chlorhexidine diphosphanilate, chlorhexidine digluconate, chlorhexidine diacetate, chlorhexidine dihydrochloride, chlorhexidine dichloride, chlorhexidine gluconate, chlorhexidine dihydroiodide, chlorhexidine diperchlorate, chlorhexidine dinitrate, chlorhexidine sulfate, chlorhexidine sulfite, chlorhexidine thiosulfate, chlorhexidine di-acid phosphate, chlorhexidine difluorophosphate, chlorhexidine diformate, chlorhexidine dipropionate, chlorhexidine di-iodobutyrate, chlorhexidine di-valerate, chlorhexidine dicaproate, chlorhexidine malonate, chlorhexidine succinate, chlorhexidine malate, chlothexidine tartrate, chlorhexidine dimonoglycolate, chlorhexidine monodiglycolate, chlorhexidine dilactate, chlorhexidine di-alpha-hydroxyisobutyrate, chlorhexidine diglucoheptonate, chlorhexidine di-isothionate, chlorhexidine dibenzoate, chlorhexidine dicinnamate, chlorhexidine dimandelate, chlorhexidine di-isophthalate, chlorhexidine di-2-hydroxynapthoate, and chlorhexidine embonate.

Especially preferred diguanidine cationic biocides for use herein include polyhexamethylene biguanide, chlorhexidine and salts and mixtures thereof.

The composition may comprise at least 0.5 ppm of a guanidine based cationic biocide, preferably at least 1 ppm, preferably at least 5 ppm, suitably at least 10 ppm, for example at least 20 ppm.

In some embodiments the composition may comprise up to 1000 ppm, up to 500 ppm, up to 400 ppm, up to 300 ppm, up to 200 ppm, up to 150 ppm or up to 100 ppm of guanidine based cationic biocide. The amount of component (a) may vary depending on the nature of the plant with which the composition is contacted.

The composition which is contacted with the plant may comprise from 0.1 to 1000 ppm of a guanidine based cationic biocide, preferably 1 to 500 ppm for example from 1 to 100 ppm or from 5 to 60 ppm.

In some embodiments the composition may comprise from 20 to 60 ppm of a guanidine based cationic biocide, for example from 30 to 50 ppm.

In some embodiments the composition may comprise from 60 to 100 ppm of a guanidine based cationic biocide, for example from 70 to 90 ppm.

In some embodiments the composition may comprise from 300 to 500 ppm of a guanidine based cationic biocide, for example from 375 to 425 ppm.

In some embodiments the composition may comprise from 500 to 700 ppm of a guanidine based cationic biocide, for example from 550 to 650 ppm.

A mixture of guanidine based cationic biocide may be present. In such embodiments the above amounts refer to the total of all such compounds present in the composition. The guanidine based cationic biocide may be incorporated into the composition along with a diluent or carrier. The above definitions refer to the amount of active component present.

In some preferred embodiments component (b) of the present invention comprises a quaternary ammonium salt and a guanidine based compound.

The composition contacted with the plant comprises component (c), a hydrocarbyl-saccharide compound.

Component (c) is a hydrocarbyl-saccharide compound. By this we mean to refer to a compound including a hydrocarbyl group and a saccharide moiety.

The hydrocarbyl group may be bound to the saccharide moiety via a carbon-carbon bond or via a carbon-oxygen bond. Preferably it is bound to the saccharide moiety via a carbon-oxygen bond, for example via an ester linkage or an ether linkage. Most preferably it is bound to the oligosaccharide moiety via an ether linkage. Thus in preferred embodiments component (c) is a hydrocarbyl ether of an saccharide moiety.

Component (c) may include one or more hydrocarbyl groups. Preferably it comprises one hydrocarbyl group. The hydrocarbyl group may be an optionally substituted alkyl, alkenyl or alkynylene group. Most preferably it is an optionally substituted alkyl group. Suitable substituents include halo, hydroxy, nitro, mercapto, amino, alkyl, alkoxy, aryl, sulfo and sulfoxy. Any subsubstitution may be within the chain or along it, for example the chain may include an ether linkage.

Preferably the hydrocarbyl group is an unsubstituted alkyl group. It may be straight chained or may be branched. Most preferably it is straight chained. Especially preferred hydrocarbyl groups are alkyl groups having from 1 to 30 carbon atoms, preferably 2 to 24 carbon atoms, more preferably from 4 to 20 carbon atoms, suitably from 4 to 16 carbon atoms, preferably from 6 to 14 carbon atoms, for example from 6 to 12 carbon atoms and most preferably from 8 to 10 carbon atoms. Preferred are straight chained alkyl groups having from 6 to 12 carbon atoms.

The saccharide moiety of the hydrocarbyl oligosaccharide species may include from 1 to 10 monosaccharide species. Thus it may be a monosaccharide unit, a disaccharide unit or an oligosaccharide unit. Preferably the saccharide moiety comprises from 2 to 8, suitably from 2 to 6, preferably from 2 to 5, for example 3 or 4 monosaccharide units. Any suitable monosaccharide unit may be included. Preferred saccharides include allose, altrose, glucose, mannose, gulose, idose, galactose and talose.

Mixtures of two or more monosaccharides may be present in the saccharide moiety. Preferably the saccharide moiety comprises glucose. More preferably all of the monosaccharide units present in the saccharide moiety are glucose. In especially preferred embodiments component (c) comprises an alkylpolyglucoside, preferably a monoalkyl-polyglucoside. Suitably component (c) comprises a compound of formula (IV): 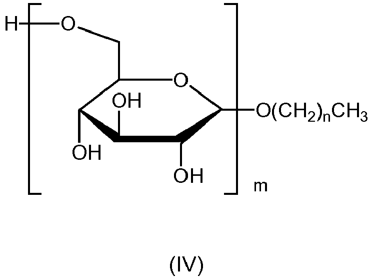 wherein n is from 5 to 12, preferably from 6 to 10, more preferably from 7 to 9 and m is from 1 to 6, preferably from 1 to 4, more preferably 1 or 2.

Component (c) may be present in the composition contacted with the plant in an amount of at least 0.1 ppm, preferably at least 0.5 ppm, more preferably at least 1 ppm, preferably at least 2.5 ppm, suitably at least 5 ppm, more preferably at least 10 ppm, preferably at least 15 ppm.

Component (c) may be present in the composition which is contacted with the plant in an amount of up to 20000 ppm, preferably up to 10000 ppm, more preferably up to 5000 ppm, suitably up to 4000 ppm, preferably up to 3000 ppm, more preferably up to 2000 ppm, preferably up to 1750 ppm, for example up to 1500 ppm.

In some embodiments the composition may comprise up to 1000 ppm, up to 500 ppm, up to 400 ppm, up to 300 ppm, up to 200 ppm, up to 150 ppm or up to 100 ppm component (c). The amount of component (c) may vary depending on the nature of the grass-carrying surface to which the composition is applied and the intended use of that surface.

In some embodiments the composition may comprise from 50 to 120 ppm component (c), for example from 70 to 90 ppm.

In some embodiments the composition may comprise from 200 to 300 ppm component (c), for example from 230 to 250 ppm.

In some embodiments the composition may comprise from 600 to 1000 ppm component (c), for example from 750 to 850 ppm.

In some embodiments the composition may comprise from 1000 to 1500 ppm component (c), for example from 1150 to 1250 ppm.

Component (c) may comprise a mixture of compounds. In such embodiments the above amounts refer to all such components present in the composition.

Component (c) may be incorporated into the composition along with a diluent or carrier. The above definitions refer to the amount of active component present.

Component (a) and component (c) are suitably present in the composition contacted with the plant in a weight ratio of 5:1 to 1:5, preferably from 0:1 to 1:3, suitably from 2:1 to 1:2, for example about 1:1. The weight ratio of component (c) to component (a) is preferably from 2:1 to 1:2, more preferably from 1.5:1 to 1:1.5. Suitably it is about 1:1.

The composition contacted with the plant in the method of the present invention may further comprise one or more additional biocide components. These may include a non-ionic biocide, for example 2-bromo-2-nitro-1,3-dioxane or 2-bromo-2-nitro-propane-1,3-diol.

The composition contacted with the plant comprises component (d), a non-ionic surfactant.

Preferably the composition contacted with the plant comprises at least 0.1 ppm non-ionic surfactant, preferably at least 0.5 ppm, more preferably at least 1 ppm, suitably at least 2.5 ppm, for example at least 5 ppm.

The composition may comprise up to 10000 ppm non ionic surfactant, preferably up to 5000 ppm more preferably up to 2000 ppm, suitably up to 1000 ppm, preferably up to 1500 ppm, for example up to 1000 ppm, or up to 750 ppm.

In some embodiments the composition may comprise up to 500 ppm, up to 250 ppm, up to 100 ppm, or up to 60 ppm component (d). The amount of component (d) may vary depending on the nature of the plant with which the composition is contacted.

In some embodiments the composition may comprise from 20 to 60 ppm component (d), for example from 30 to 50 ppm.

In some embodiments the composition may comprise from 60 to 100 ppm component (d), for example from 70 to 90 ppm.

In some embodiments the composition may comprise from 300 to 500 ppm component (d), for example from 375 to 475 ppm.

In some embodiments the composition may comprise from 1000 to 1500 ppm component (d), for example from 550 to 650 ppm.

Suitable nonionic surfactants include alkoxylated compounds, sugar esters and other compounds known to the person skilled in the art.

Preferred nonionic surfactants are alkoylated compounds, for example alkoxylated alcohols or esters. Preferred alkoxylated compounds are polyalkoxylated compounds.

Preferred nonionic compounds include a hydrocarbyl group and one or more ethylene oxide and/or propylene oxide residues. Preferred hydrocarbyl groups are alkyl and alkenyl groups, preferably having from 4 to 30 carbon atoms. Preferred are alkyl groups, having for example from 6 to 20 carbon atoms. Nonionic surfactants including one or more ethylene oxide residues are preferred.

Especially preferred non-ionic surfactants for use herein are alcoholalkoxylate compounds, in particular alcoholethoxylate compounds. Preferred non-ionic surfactants are those of formula CH₃(CH₂)ₙO(CH₂CH₂O)ₘH wherein n is from 5 to 20, preferably from 6 to 15 and m is from 1 to 12, preferably from 3 to 10.

An especially preferred non-ionic surfactant comprises a mixture of isomers in which n is 9 or 11 and m is 4 to 8.

The composition applied to the grass preferably has a pH of less than 10, preferably from 2 to 9, more preferably from 3 to 6, for example from 4.5 to 6.5.

The composition contacted with the plant in the method of the present invention further comprises one or more surfactants. Suitable surfactants include anionic surfactants, cationic surfactants, non-ionic surfactants, amphoteric surfactants and mixtures thereof.

Suitable surfactants for use herein will be known to the person skilled in the art and include for example the amphoteric and non-ionic surfactants listed in US 2006/166849.

The composition used in the method of the present invention may include one or more further ingredients, for example terpenes, fragrances, preservatives, colourants and antioxidants The composition may include one or more components for promoting plant growth and fertility, for example nitrogenous fertilisers. It may include one or more components for deterring moss and/or algal growth, for example iron sulphate. Other suitable components which may be included in the composition which is contacted with the plant will be known to the person skilled in the art.

The compositions contacted with the plant in the method of the present invention are preferably aqueous compositions. In some embodiments the composition may comprise a further solvent preferably a water-miscible solvent. Suitable water-miscible solvents may be present in an amount of up to 10 wt%, suitably up to 7.5 wt%, preferably up to 5 wt%, for example up to 2.5 wt%. Suitable solvents for use herein include alcohols and esters including polyhydric alcohols.

Preferably the compositions contacted with the plant in the method of the present invention comprise at least 70 wt% water, preferably least 80 wt%, preferably at least 90 wt%, more preferably at least 95 wt%, suitably at least 97 wt%, for example at least 99 wt%.

In some preferred embodiments water is the only solvent present in the composition and it comprises less than 1 wt% other solvents or diluents. Preferably the composition applied to the grass-carrying surface is substantially free of solvents other than water.

Preferably the composition comprises less than 1 wt% alcohols, preferably less than 0.1 wt%, preferably than 0.01 wt%, preferably less than 0.001 wt% or less than 0.0001 wt%.

Preferably the composition contacted with the plant in the method of the present invention comprises less than 10000 ppm metal compounds, preferably less than 5000 ppm, more preferably less than 1000 ppm. Preferably no metal compounds are deliberately added to the composition. Small amounts of metal compounds may be present as impurities in one of the components or in trace amounts in the water used.

Preferably the composition comprises less than 1000 ppm transition metals, preferably less than 500 ppm, more preferably less than 100 ppm, especially less than 50 ppm.

According to a second aspect the present invention provides a plant treatment composition comprising components (a), (b), (c) and (d). The method of the first aspect preferably comprises contacting the plant with the composition of the second aspect. Preferably features of the second aspect, for example the nature of components (a), (b), (c) and (d), possible further components and amounts of components, are as defined in relation to the first aspect.

In preferred embodiments the method of the first aspect of the present invention involves contacting the plant with a composition comprising:
10 to 2500, suitably 500 to 1500 ppm of a compound of formula (I);
10 to 2500, suitably 500 to 1500 ppm of a hydrocarbyl saccharide compound;
10 to 3000, suitably 500 to 2000 ppm quaternary ammonium biocide;
5 to 1000, suitably 250 to 750 ppm guanidine based cationic biocide; and
5 to 1000, suitably 250 to 750 ppm non-ionic surfactants.

The above amounts refer to the amount of each component present in the composition which is contacted with the plant. This composition is very dilute and a composition would usually be provided in concentrated form to be diluted by the user prior to use.

Thus in the method of the present invention a concentrated solution will be diluted prior to contact with the plant. The present invention may therefore further provide a concentrated plant treatment composition. Such a concentrated composition preferably comprises:
(a) from 0.01 to 10 wt%, preferably 0.05 to 5 wt%, more preferably 0.1 to 2 wt% component of a compound of formula (I);
(b) from 0.01 to 15 wt%, preferably 0.1 to 10 wt%, more preferably 0.5 to 5 wt% one or more cationic biocides;
(c) from 0.01 to 10 wt%, preferably 0.05 to 5 wt%, more preferably 0.1 to 2 wt% of a hydrocarbyl saccharide compound; and
(d) from 0.01 to 10 wt%, preferably from 0.05 to 5 wt%, more preferably from 0.1 to 1 wt% nonionic surfactant.

Suitably in such concentrated compositions component (b) comprises a mixture of a quaternary ammonium salt and a guanidine based compound.

Preferably the concentrated composition comprises 0.01 to 15 wt% quaternary ammonium salts, suitably 0.1 to 10 wt%, preferably 0.25 to 2.5 wt%. Preferably the concentrated composition comprises 0.01 to 6 wt% guanidine based compounds, preferably 0.05 to 4 wt%, more preferably 0.1 to 1 wt%.

The concentrated composition preferably further comprises from 0.01 to 10 wt% non-ionic surfactant, preferably from 0.05 to 5 wt%, more preferably from 0.1 to 1 wt%.

Except for the actual amounts of each component, preferred features of the concentrated composition are, where appropriate, as defined in relation to the composition which is contacted with the plant the method of the first aspect.

The method of the present invention may be used to treat any suitable plant. Plants which may be treated include trees, decorative and ornamental plants, cash crops, agricultural crops, food crops and bushes.

The plants treated by the method of the present invention may be deciduous, perennials, annuals or biennials.

Examples of trees which may be treated include oak trees, elm trees and tropical trees. Examples of tropical trees include palm trees and banana trees.

Examples of cash crops which may be treated by the method of the present invention include cotton, tobacco, jute, tea, coffee, sugar cane, sugar beet, indigo, cannabis, bananas, rice, oranges, soya bean, cocoa, rape seed, rubber, corn, grain and wheat.

Examples of decorative and ornamental plants which may be treated by the method of the present invention include flowers, shrubs, bushes and other ornamental plants found in gardens. Flowers which may be treated include those grown from seed and those grown from bulbs. Examples of flowers which may be treated include daffodils.

Agricultural crops which may be treated by the method of the present invention include cereals for example, wheat, corn, barley and maize.

The method of the present invention may be used to treat plants which are grown for human or animal consumption. Preferably the present invention does not involve the treatment of grasses which are not intended for human consumption.

Food crops which could be treated include those which grow above ground, for example sprouts and peas and those which grow below ground, for examples potatoes and onions.

The method of the present invention could be used to treat fruit or nut bearing plants for example strawberry plants, blackberry bushes or orange trees.

The invention may be used to treat legumes, vegetables and herbs.

The invention may be used to treat seeds and/or seedlings.

The invention may be used to treat plants grown to provide biofuel, for example rapeseed.

In some embodiments the invention may be used to treat trees. For example it may be used to combat sudden oak death. It could be used in the treatment of dutch elm disease.

In some embodiments the invention may be used to prevent damage to banana trees by nematodes.

In some embodiments the present invention may be used in the treatment of flowers. For example it may be used to combat infection of daffodils with eel worm nematodes.

In some especially preferred embodiments the present invention may be used in the treatment of food crops. Food crops which may be treated include potatoes and onions for combating eel worm nematodes and soya beans for combating fusarium wilt.

Any part of the plant may be treated by the method of the present invention. For example the method may involve treatment of the leaves, stem, stalk, roots, branches, flower, fruit, seeds or bulbs of the plant.

In preferred embodiments the method of the present invention involves contacting the plant with an aqueous composition. Suitably it involves contacting the plant with a dilute aqueous composition such as is described above.

In some embodiments however the method of the present invention may involve using a solid material comprising components (a), (b), (c) and (d).

In preferred embodiments the method of the present invention involves contacting the plant with a dilute aqueous composition as previously defined herein. The composition may be contacted with the plant by any suitable means and such means will be well known to the person skilled in the art. The chosen contact method will depend on the nature of the plant and the part of the plant that is treated.

In some embodiments the method may involve treating parts of the plant which are above the ground. In such embodiments the method may involve spraying the plant with a composition comprising components (a), (b), (c) and (d).

In some preferred embodiments the method may be used to treat the roots of a plant. In such embodiments the method suitably involves treating the general area in which the plant grows and allowing the treatment composition to disperse into the soil.

In embodiments in which the composition is applied to the soil, the skilled person will appreciate that the composition will not remain on the surface and will typically be absorbed into the soil. Thus a suitable treatment level may depend on the nature of the soil on which the plant grows. Absorption of the composition into the soil allows the composition to reach the roots of the plant and thus act against any organism present in the soil which may damage the root.

In some embodiments in which seed is treated, this may involve immersing the seed in or washing the seed with a composition comprising components (a), (b), (c) and (d).

Preferably the method of the present invention involves contacting the plant with a composition which combats nematodes.

By combating nematodes we mean that the method of the present invention may be used to kill nematodes and/or prevent or inhibit the growth of nematodes.

The method of the present invention may be used to combat nematodes which live in the soil around the root of the plant (ectoparasites) and/or those which have entered the plant (endoparasites).

Preferably the compositions used in the present invention are nematicidal compositions. Preferably the compositions are nematicidal against nematodes selected from one or more of *Helicotylenchus* (spiral), *Meloidogyne* (root knot), *Heterodera* (cyst), *Tylenchorhynchus* (stunt), *Pratylenchus* (lesion), *Hemicycliophora* (sheath), *Tylenchus* (citrus), *Subanguina* (root gall), *Criconemella* (ring), *Paratrichodorus* (stubby root), *Paratylenchus* (pin), *Longidorus* (needle), *Pratylenchoides, Rotylenchus* (spiral), *Ditylenchus* (stem and bulb), *Longidorus* (spear), *Hoprolaimus* (spiral) and *Aphelenchida* (foliar).

Different plants may be attacked by different nematodes. Some nematodes will be a pest for very many different plants.

Preferably treatment of a plant according to the method of the present invention leads to a reduction of at least 50% in the number of nematodes present at or near to the surface after 24 hours. Preferably there is a reduction of at least 60%, more preferably at least 70%, preferably at least 80%, more preferably at least 90%, suitably at least 95%, for example at least 98% or at least 99%. In especially preferred embodiments substantially all of the nematodes at or near a grass-carrying surface are killed 24 hours after treatment of said surface according to the method of the present invention.

In preferred embodiments the method of the present invention has long lasting efficacy. Preferably 7 days after treatment according to the method of the present invention there is a reduction in the number of nematodes at or near the roots of the plant of at least 50%, preferably a reduction of at least 70%, more preferably at least 90% for example at least 95% or at least 99%.

Preferably 14 days after treatment according to the method of the present invention there is a reduction in the number of nematodes at or near to the roots of the plant of at least 50%, preferably a reduction of at least 70%, more preferably at least 90% for example at least 95%.

By the number of nematodes at or near to the roots of the plant we mean to refer to nematodes present within 30 cm of the surface. A method by which the nematode population in a soil sample can be determined is detailed in relation to example 2.

Alternatively and/or additionally the composition used in the method of the present invention may also be effective against one or more types of bacteria and/or algae and/or fungi.

In some embodiments the composition used in the method of the present invention may be used to kill bacteria and thus may be regarded as a bacteriacidal composition.

In some embodiments the composition used in the method of the present invention may prevent or inhibit the growth of bacteria and thus may be regarded as an antibacterial or bacteriostatic composition.

In some embodiments the composition used in the method of the present invention may prevent or inhibit the growth of viruses and may be regarded as antiviral composition.

In some embodiments the composition used in the method of the present invention may kill viruses and thus may be regarded as a virucidal composition.

In some embodiments the composition used in the method of the present invention may kill fungi and thus may be considered as a fungicidal composition.

In some embodiments the composition may prevent or inhibit the growth of fungi and thus may be regarded as antifungal.

In some embodiments the composition used in the method of the present invention may kill algae and/or may prevent or inhibit the growth of algae.

The invention will now be further described with reference to the following examples.

### Example 1

A concentrated composition was prepared comprising the following components:
0.4 wt% alcohol ethoxylate comprising a mixture of isomers of formula CH₃(CH₂)ₙO[CH₂CH₂O]ₘH where n = 9 or 11 and m = 4 to 8;
0.8 wt% alkyl polyglucoside comprising a mixture of isomers of formula: 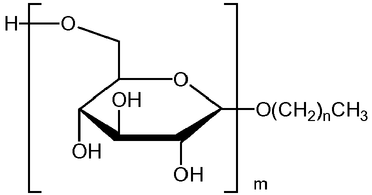 where n = 7 or 9 and m = 1 to 5;
1.0 wt% benzyl dimethyl alkyl ammonium chloride wherein alkyl represents a mixture of C₁₂ to C₁₆ alkyl groups;
0.4 wt% polyhexamethylene biguanide hydrochloride;
0.8 wt% of the compound of formula (III);
Water to 100%

This composition was diluted with water in a ratio of 1:99 to provide the application composition.

### Example 2

The number of nematodes in a soil sample may be counted using the following method.

### Materials

Baermann funnel
   1. Stand
   2. Rubber tubing
   3. Bossheads
   4. Clamps
   5. Kimwipes
   6. Tubing Clip
Sieves - 250µm + 53µm
Small beakers
Nematode counting slide
Mircoscope

### Proecedure

Mix soil sample received and remove 100ml.
Sieve soil thoroughly using 250µm and 53µm sieves.
Place sieved soil in Baermann funnel and saturate with water.
Leave for 24hrs.
Drain 20ml from the funnel.
Pipette 1ml onto nematode counting slide and count number of nematodes.
Use the following equation to give # nematodes per 100ml soil.
Number of nematodes counted in slide x 20 and 1.4.
If the nematode count is very high, count a representative number of cells, and multiply accordingly.

### Example 3

Containers (volume 25cm³) were filled with one of 4 rootzone types:
A) USGA sand rootzone
B) 70/30 sand soil rootzone
C) loam soil
D) compost (peat based)

Dampened rootzones were inoculated with approximately 1000 nematodes. The nematode inoculum contained approximately: 500 *Helicotylenchus,* 200 *Tylenchorhynchus,* 100 *Heterodera* juveniles, 150 *Meloidogyne* juveniles and 50 *Trichodorus.* After 24 hours the containers were treated with 2cm³ of the concentrated composition of example 1 diluted to 10%, 5%, 1%, 0.1%, 0.01% and 0.001% (weight per volume). A control composition containing 100% water was also used.

48 hours after treatment, rootzone samples were extracted using the method of example 2 and the numbers of viable nematodes recovered from each rootzone were recorded. To ensure that they were killed the nematodes were washed with fresh water and reassessed after 24 hours.

All of the experiments were repeated 3 times and the average results are shown in table 1. No differentiation between species of nematodes was observed and the results give the total number of nematodes present 48 hours after treatment.

**Table 1**

| **Concentration of concentrated composition of example 1 (Y.w/v)** | **USGA Sand rootzone** | **70/30 sand soild rootzone** | **Loam soil** | **Compost (peat based)** |
|---|---|---|---|---|
| 0 (control) | 837 | 888 | 866 | 939 |
| 0.001 | 864 | 824 | 876 | 897 |
| 0.01 | 450 | 637 | 752 | 829 |
| 0.1 | 605 | 673 | 670 | 780 |
| 1 | 296 | 352 | 446 | 539 |
| 5 | 326 | 416 | 483 | 502 |
| 10 | 173 | 274 | 338 | 622 |

### Example 4

Different species of nematodes were soaked in various concentrations of the composition of example 1 for 24 hours. The control was 100% water. The number of nematodes not moving after this period were counted and the mortality expressed as a % of the total number of nematodes present. The results are shown in table 2.

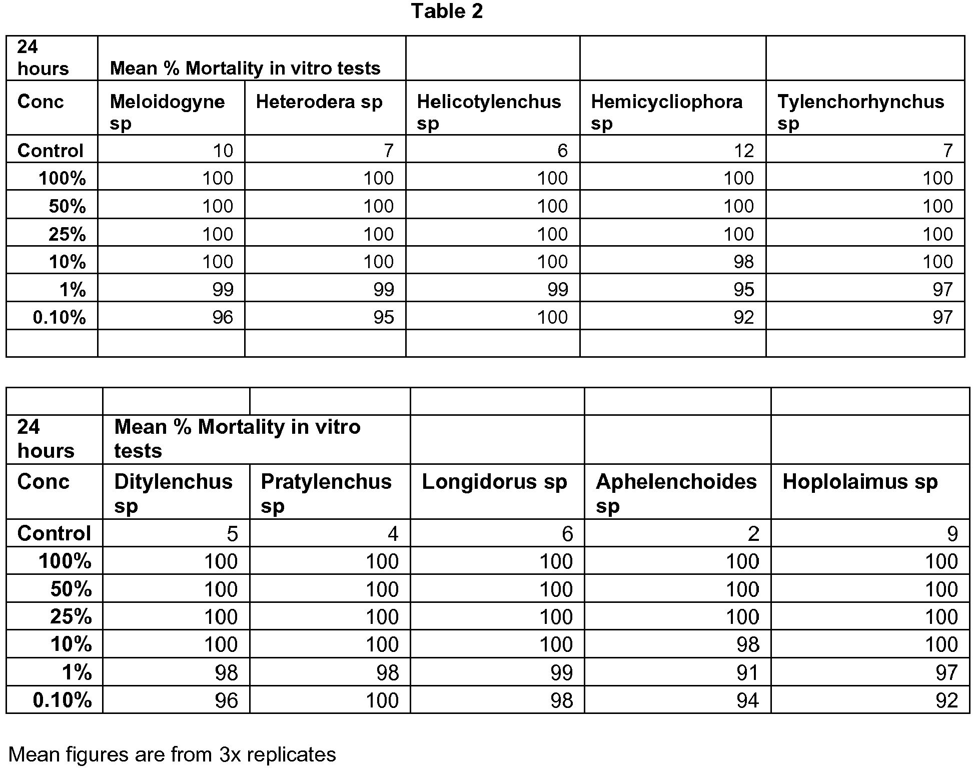

### Example 4

Mixed plant parasitic nematodes were soaked in various concentrations of the concentrated composition of example 1. The control was 100% water. The number of nematodes not moving after 1 hour and 24 hours were counted and the mortality expressed as a percentage of the total number of nematodes present. The results are shown in table 3.

**Table 3**

| | **% Mortality** | |
|---|---|---|
| **Conc** | **After 1 hour** | **After 24 hours** |
| **Control** | **14** | **18** |
| **0.00001%** | **15** | **20** |
| **0.0001%** | **15** | **24** |
| **0.001%** | **21** | **27** |
| **0.01%** | **34** | **43** |
| **0.1%** | **35** | **67** |
| **1%** | **79** | **88** |

### Example 5

A composition was prepared comprising the following components:
3.3 wt% alcohol ethoxylate comprising a mixture of isomers of formula CH₃(CH₂)ₙO[CH₂CH₂O]ₘH where n = 9 or 11 and m = 4 to 8;
0.8 wt% alkyl polyglucoside comprising a mixture of isomers of formula: 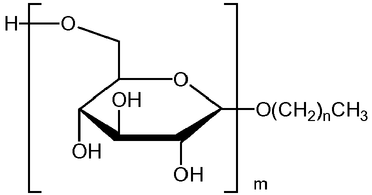 where n = 7 or 9 and m = 1 to 5;
1.0 wt% benzyl dimethyl alkyl ammonium chloride wherein alkyl represents a mixture of C₁₂ to C₁₆ alkyl groups;
0.6 wt% polyhexamethylene biguanide hydrochloride;
0.8 wt% of the compound of formula (I);
0.02 wt% dye;
Water to 100%

### Example 6

Nematodes were soaked in the composition of example 6 at various concentrations for 3 and 48 hrs. The tests were replicated 3-fold. The control was 100% water. The number of nematodes which were not moving after these times were counted and mortality expressed as a % of the total number of nematodes present. The results are shown in table 4:

**Table 4**

| **3 hours** | **% Mortality** | | | |
|---|---|---|---|---|
| **Conc** | **Rep 1** | **Rep 2** | **Rep 3** | **Mean** |
| **Control** | 11 | 13 | 28 | 17.3 |
| **100%** | 100 | 95 | 100 | 98.3 |
| **50%** | 100 | 95 | 100 | 98.3 |
| **25%** | 100 | 100 | 100 | 100.0 |
| **10%** | 96 | 100 | 100 | 98.7 |
| **1%** | 97 | 97 | 96 | 96.7 |
| **0.10%** | 100 | 89 | 87 | 92.0 |
| | | | | |

| **48 hours** | **% Mortality** | | | |
|---|---|---|---|---|
| **Conc** | **Rep 1** | **Rep 2** | **Rep 3** | **Mean** |
| **Control** | 12 | 18 | 37 | 22.3 |
| **100%** | 100 | 100 | 100 | 100.0 |
| **50%** | 100 | 100 | 100 | 100.0 |
| **25%** | 100 | 100 | 100 | 100.0 |
| **10%** | 100 | 100 | 100 | 100.0 |
| **1%** | 100 | 100 | 100 | 100.0 |
| **0.10%** | 100 | 100 | 100 | 100.0 |

### Example 7

Different species of nematodes were soaked in various concentrations of the composition of example 6 for 24 hours. The control was 100% water. The number of nematodes not moving after this period were counted and the mortality expressed as a % of the total number of nematodes present. The results are shown in table 5.

**Table 5**

| **24 hours** | **Mean % Mortality** | | | | |
|---|---|---|---|---|---|
| | **RKN** | **Cyst** | **Spiral** | **Sheath** | **Stunt** |
| **Control** | 10 | 7 | 6 | 12 | 7 |
| **100%** | 100 | 100 | 100 | 100 | 100 |
| **50%** | 100 | 100 | 100 | 100 | 100 |
| **25%** | 100 | 100 | 100 | 100 | 100 |
| **10%** | 100 | 100 | 100 | 98 | 100 |
| **1%** | 99 | 99 | 99 | 95 | 97 |
| **0.10%** | 96 | 95 | 100 | 92 | 97 |
| | | | | | |
| Mean figures are from 3x replicates | | | | | |

### Example 8

Compositions were prepared comprising the following components:

| | **A** | **B** | **C** | **D** | **E** | **F** | **G** | **H** | **I** | **J** |
|---|---|---|---|---|---|---|---|---|---|---|
| **alcohol ethoxylate (wt%)** | 0.4 | 1 | | | 1 | 1 | | | | |
| **alkyl polyglucoside (wt%)** | 0.8 | | | 1 | | 1 | | | 1 | 1 |
| **benzyl dimethyl alkyl ammonium chloride (wt%)** | 1.0 | | | | | | 1 | 1 | | |
| **compound of formula (III) (wt%)** | 0.4 | | | | | | | 1 | | 1 |
| **Polyhexamethyl biguanide hydrochloride (wt%)** | 0.8 | | 1 | | 1 | | 1 | | 1 | |
| **water** | to 100% | to 100% | to 100% | to 100% | to 100% | to 100% | to 100% | to 100% | to 100% | to 100% |

The alcohol ethoxylate, alkyl polyglucoside and benzyl dimethyl ammonium chloride components are as defined in example 1.

Compositions A to J were diluted in a 1:99 ratio with water. Nematodes were then soaked in these compositions and the number of motile /non-motile parasites were counted at 1 hour, 24 hours and 48 hours. The results are shown in table 6, in terms of %mortality. Water was used as a control.

**Table 6**

| Composition | 1 hr | 24 hrs | 48 hrs |
|---|---|---|---|
| | Mean Mortality | Mean Mortality | Mean Mortality |
| Water | 8.52 | 13.63 | 19.51 |
| A | 83.8 | 96.37 | 100 |
| B | 46.3 | 39.03 | 47.72 |
| C | 19.15 | 43.59 | 84.24 |
| D | 18.26 | 21.83 | 41.33 |
| E | 43.30 | 78.7 | 45.3 |
| F | 45.28 | 25.36 | 13.43 |
| G | 49.87 | 92.69 | 69.29 |
| H | 64.13 | 90.3 | 87.02 |
| I | 5.72 | 45 | 45.45 |
| J | 14.01 | 74.07 | 68.52 |

### Example 9

Various species of plant nematodes were soaked in the composition of example 1, diluted to different concentrations for 24 hours. Table 7 shows the percentage mortality of the nematodes at concentrations of 0.1, 1, 10, 25, 50 and 100% v/v. As can be seen the composition of the invention was effective at all concentrations against the nematode species root-knot, cyst, spiral, sheath, stunt, stem, pin, needle, bud/leaf and lance.

**Table 7**

| 24hrs | Mean % Mortality | | | | | | | | | |
|---|---|---|---|---|---|---|---|---|---|---|
| | Root Knot | Cyst | Spiral | Sheath | Stunt | Stem | Pin | Needle | Bud/Leaf | Lance |
| Control | 10 | 7 | 6 | 12 | 7 | 5 | 4 | 6 | 2 | 9 |
| 100% | 100 | 100 | 100 | 100 | 100 | 100 | 100 | 100 | 100 | 100 |
| 50% | 100 | 100 | 100 | 100 | 100 | 100 | 100 | 100 | 100 | 100 |
| 25% | 100 | 100 | 100 | 100 | 100 | 100 | 100 | 100 | 100 | 100 |
| 10% | 100 | 100 | 100 | 100 | 100 | 100 | 100 | 100 | 98 | 100 |
| 1% | 99 | 99 | 99 | 95 | 97 | 98 | 98 | 99 | 91 | 97 |
| 0.10% | 96 | 95 | 100 | 92 | 97 | 96 | 100 | 98 | 94 | 92 |

### Example 10

Four equal areas of potato crops were treated with the compositions detailed in table 7. The number of tubers obtained was greatest when treatment was carried out with the composition of the invention. The results shown are the average of four replicated tests.

| **Composition** | **Number of potato tubers** |
|---|---|
| Example 1 diluted 1:99 with water | 118.0 |
| Water | 69.8 |
| Standard commercial nematicide | 91.5 |
| Standard commercial nematicide diluted 1:4 | 83.5 |

## Claims

1. A plant treatment method comprising contacting the plant with:
(a) a compound of formula (I): 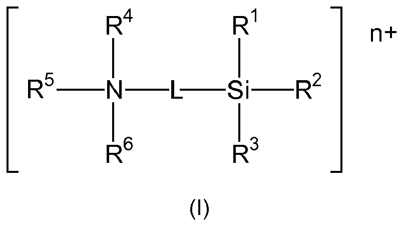 or a derivative salt thereof wherein L is a linking group; each of R¹, R² and R³ is independently selected from an optionally substituted alkyl, alkenyl, aryl or alkoxy group; R⁴ is oxygen or an optionally substituted alkyl, alkenyl or aryl group; each of R⁵ and R⁶ is an optionally substituted alkyl, alkenyl or aryl group;
(b) at least one cationic biocide;
(c) a hydrocarbyl saccharide compound; and
(d) a non-ionic surfactant.

2. A method according to claim 1 which involves contacting the plant with a single composition comprising components (a), (b), (c) and (d).

3. A method according to claim 1 or claim 2 wherein component (a) is the compound of formula (III):

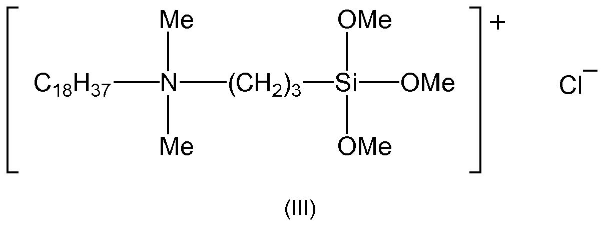

4. A method according to any preceding claim wherein component b) comprises a cationic biocide selected from a quaternary ammonium salt, a guanidine based compound or a mixture thereof.

5. A method according to claim 4 wherein component (b) comprises a quaternary ammonium salt.

6. A method according to any preceding claim wherein component (c) comprises a compound of formula (IV): 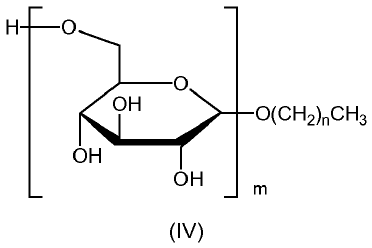 wherein n is from 5 to 12 and m is from 1 to 6.

7. A method according to any preceding claim which involves contacting the plant with an aqueous composition comprising:
10 to 2500, suitably 500 to 1500 ppm of a compound of formula (I);
10 to 2500, suitably 500 to 1500 ppm of a hydrocarbyl saccharide compound;
10 to 3000, suitably 500 to 2000 ppm quaternary ammonium biocide;
5 to 1000, suitably 250 to 750 ppm guanidine based cationic biocide; and
5 to 1000, suitably 250 to 750 ppm non-ionic surfactants.

8. A method according to any preceding claim wherein the composition contacted with the plant is prepared by dilution of a concentrated composition in a ratio of from 1:1000 to 1:2.

9. A method according to any preceding claim which involves contacting the plant with a composition which combats nematodes.

10. A method according to claim 9 which leads to a reduction of at least 50% in the number of nematodes present at or near to the surface after 24 hours.

11. A method according to any preceding claim which involves contacting the plant with a composition which is effective against one or more types of bacteria and/or algae and/or fungi

## Patentansprüche

1. Verfahren zur Behandlung einer Pflanze, bei dem man die Pflanze mit:
(a) einer Verbindung der Formel (I): 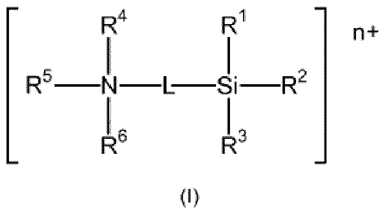 oder einem Derivatsalz davon, wobei L für eine Brückengruppe steht; R¹, R² und R³ jeweils unabhängig voneinander aus einer gegebenenfalls substituierten Alkyl-, Alkenyl-, Aryl- oder Alkoxygruppe ausgewählt sind; R⁴ für Sauerstoff oder eine gegebenenfalls substituierte Alkyl-, Alkenyl- oder Arylgruppe steht; R⁵ und R⁶ jeweils für eine gegebenenfalls substituierte Alkyl-, Alkenyl- oder Arylgruppe stehen;
(b) mindestens einem kationischen Biozid;
(c) einer Hydrocarbylsaccharidverbindung und
(d) einem nichtionisches Tensid
in Berührung bringt.

2. Verfahren nach Anspruch 1, bei dem man die Pflenze mit einer einzigen Zusammensetzung, die die Komponenten (a), (b), (c) und (d) umfasst, in Berührung bringt.

3. Verfahren nach Anspruch 1 oder Anspruch 2, bei dem es sich bei Komponente (a) um die Verbindung der Formel (III) handelt:

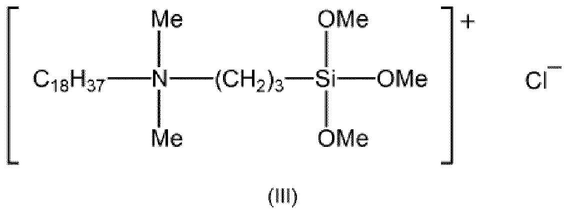

4. Verfahren nach einem der vorhergehenden Ansprüche, bei dem Komponente (b) ein kationisches Biozid umfasst, das aus einem quartären Ammoniumsalz, einer auf Guanidin basierenden Verbindung oder einer Mischung davon ausgewählt ist.

5. Verfahren nach Anspruch 4, bei dem Komponente (b) ein quartäres Ammoniumsalz umfasst.

6. Verfahren nach einem der vorhergehenden Ansprüche, bei dem Komponente (c) eine Verbindung der Formel (IV) umfasst: 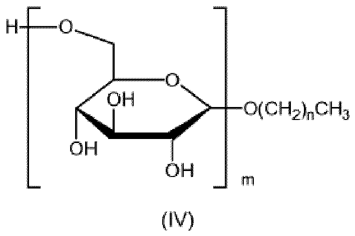 wobei n für 5 bis 12 steht und m für 1 bis 6 steht.

7. Verfahren nach einem der vorhergehenden Ansprüche, bei dem man die Pflanze mit einer wässrigen Zusammensetzung, umfassend
10 bis 2500, geeigneterweise 500 bis 1500 ppm einer Verbindung der Formel (I);
10 bis 2500, geeigneterweise 500 bis 1500 ppm einer Hydrocarbylsaccharidverbindung;
10 bis 3000, geeigneterweise 500 bis 2000 ppm quartäres Ammoniumbiozid;
5 bis 1000, geeigneterweise 250 bis 750 ppm auf Guanidin basierendes kationisches Biozid und
5 bis 1000, geeigneterweise 250 bis 750 ppm nichtionische Tenside;
in Berührung bringt.

8. Verfahren nach einem der vorhergehenden Ansprüche, wobei die mit der Pflanze in Berührung gebrachte Zusammensetzung durch Verdünnen einer konzentrierten Zusammensetzung in einem Verhältnis von 1:1000 bis 1:2 hergestellt wird.

9. Verfahren nach einem der vorhergehenden Ansprüche, bei dem man die Pflanze mit einer Nematoden bekämpfenden Zusammensetzung in Berührung bringt.

10. Verfahren nach Anspruch 9, das zu einer Verringerung der Zahl der Nematoden an oder in der Nähe der Oberfläche nach 24 Stunden von mindestens 50% führt.

11. Verfahren nach einem der vorhergehenden Ansprüche, bei dem man die Pflanze mit einer Zusammensetzung in Berührung bringt, die gegen eine oder mehrere Arten von Bakterien und/oder Algen und/oder Pilzen wirksam ist.

## Revendications

1. Méthode de traitement d'une plante, la méthode comprenant la mise en contact de la plante avec :
(a) un composé de formule (I) : 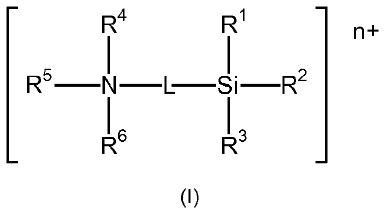 ou un sel de dérivé de celui-ci, où L est un groupement de liaison ; chacun parmi R¹, R² et R³ est choisi indépendamment parmi un groupement alkyle, alcényle, aryle ou alcoxy éventuellement substitué ; R⁴ est oxygène ou un groupement alkyle, alcényle ou aryle éventuellement substitué ; chacun parmi R⁵ et R⁶ est un groupement alkyle, alcényle ou aryle éventuellement substitué ;
(b) au moins un biocide cationique ;
(c) un composé de saccharide d'hydrocarbyle ; et
(d) un agent tensioactif non ionique.

2. Méthode selon la revendication 1, impliquant la mise en contact de la plante avec une composition unique comprenant les composants (a), (b), (c) et (d).

3. Méthode selon la revendication 1 ou la revendication 2, dans laquelle le composant (a) est le composé de formule (III) :

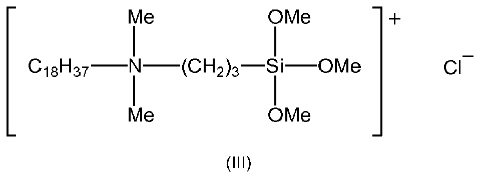

4. Méthode selon l'une quelconque des revendications précédentes, dans laquelle le composant (b) comprend un biocide cationique choisi parmi un sel d'ammonium quaternaire, un composé à base de guanidine ou un mélange de ceux-ci.

5. Méthode selon la revendication 4, dans laquelle le composant (b) comprend un sel d'ammonium quaternaire.

6. Méthode selon l'une quelconque des revendications précédentes, dans laquelle le composant (c) comprend un composé de formule (IV) : 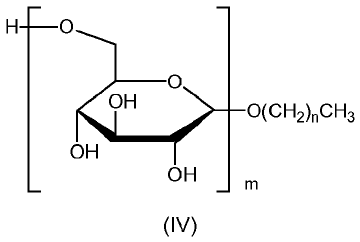 dans laquelle n va de 5 à 12 et m va de 1 à 6.

7. Méthode selon l'une quelconque des revendications précédentes, impliquant la mise en contact de la plante avec une composition aqueuse comprenant :
de 10 à 2500, de manière convenable de 500 à 1500 ppm, d'un composé de formule (I) ;
de 10 à 2500, de manière convenable de 500 à 1500 ppm, d'un composé de saccharide d'hydrocarbyle ;
de 10 à 3000, de manière convenable de 500 à 2000 ppm, d'un biocide à base d'ammonium quaternaire ;
de 5 à 1000, de manière convenable de 250 à 750 ppm, d'un biocide cationique à base de guanidine ; et
de 5 à 1000, de manière convenable de 250 à 750 ppm, d'agents tensioactifs non ioniques.

8. Méthode selon l'une quelconque des revendications précédentes, dans laquelle la composition mise en contact avec la plante est préparée par dilution d'une composition concentrée selon un rapport allant de 1:1000 à 1:2.

9. Méthode selon l'une quelconque des revendications précédentes, impliquant la mise en contact de la plante avec une composition qui lutte contre les nématodes.

10. Méthode selon la revendication 9, qui conduit à une réduction d'au moins 50% du nombre de nématodes présents au niveau de la surface ou à proximité de celle-ci, après 24 heures.

11. Méthode selon l'une quelconque des revendications précédentes, impliquant la mise en contact de la plante avec une composition qui est efficace contre un ou plusieurs types de bactéries et/ou d'algues et/ou de champignons.
